# FASCICULE DE BREVET EUROPEEN

(11) **EP 0 579 821 B1**
(45) Date de publication et mention de la délivrance du brevet: **21.08.1996**
(21) Numéro de dépôt: 93905371.6
(22) Date de dépôt: 05.02.1993
(51) Int. Cl.: B29C 47/28, B29B 15/12, B29C 47/08

(54) **DISPOSITIF DE GAINAGE D'UN MATERIAU FILIFORME PAR UNE MATIERE A L'ETAT FONDU**
VORRICHTUNG ZUM UMHULLEN VON FASERFORMIGEN MATERIAL MIT EINEM SCHMELZBAREN MATERIAL
DEVICE FOR SHEATHING A FILIFORM MATERIAL WITH A MOLTEN SUBSTANCE

(30) Priorité: 06.02.1992 FR 9201328
(43) Date de publication de la demande: 26.01.1994
(73) Titulaire: VETROTEX FRANCE S.A., F-73000 Chambéry (FR)
(72) Inventeur: BOISSONNAT, Philippe, F-73230 Barby (FR); LOUBINOUX, Dominique, F-38660 La Terrasse (FR); ROY, Louis, F-73000 Chambéry (FR)
(74) Mandataire: Breton, Jean-Claude
(86) Numéro de dépôt international: FR9300124
(87) Numéro de publication internationale: WO9315896

(56) Documents cités:
- EP-A- 0 456 970
- FR-A- 1 024 205
- FR-A- 2 394 393
- US-A- 2 198 085
- PATENT ABSTRACTS OF JAPAN vol. 5, no. 131 (M-84)(803) 21 Août 1981 & JP-A-5667239 (FURUKAWA DENKI KOGYO) 6 juin 1981
- PATENT ABSTRACTS OF JAPAN vol. 5, no. 174 (M-96)(846) 10 Novembre 1981 & JP-A-56101839 (FURUKAWA DENKI KOGYO) 14 Août 1981
- PATENT ABSTRACTS OF JAPAN vol. 6, no. 36 (M-115)(914) 5 Mars 1982 & JP-A-56150527 (FURUKAWA DENKI KOGYO) 21 Novembre 1981

## Description

La présente invention concerne un dispositif de gainage d'un matériau filiforme, constitué d'un ensemble de fils et/ou de filaments, par une matière organique à l'état fondu.

Il existe déjà un certain nombre de dispositifs, appelés têtes de câblage, têtes de recouvrement ou têtes d'équerres, montés à l'extrémité d'une extrudeuse, qui permettent de déposer une couche de matière organique thermoplastique à la surface d'un matériau filiforme.

Un dispositif de ce type est décrit, par exemple, dans le brevet US-A-4 713 139. Ce dispositif comprend, pour l'essentiel, un conduit de guidage du matériau et, à sa sortie, un orifice annulaire par où la matière organique est délivrée, disposé concentriquement à l'orifice de sortie dudit matériau.

Dès sa sortie, la matière organique est étirée sous forme de cône par le matériau en déplacement et vient s'appliquer à sa surface quelques millimètres après sa sortie.

Le principe de ce dispositif limite la vitesse défilement du matériau qui, d'après l'exemple cité, n'excède pas 1 à 2 mètres par seconde. Au-delà de cette vitesse, le matériau risque de ne plus être gainé régulièrement car la matière organique est alors étirée trop violemment pour ne pas se rompre.

La demande de brevet EP-A-393 536 décrit un autre type de dispositif, qui permet de mettre le matériau filiforme en contact avec la matière organique à l'intérieur même dudit dispositif. Ce dernier comprend, pour l'essentiel, un dispositif de guidage du matériau à l'entrée et à la sortie et, entre les deux, une chambre d'imprégnation reliée directement à l'extrudeuse. Le matériau, constitué en l'occurrence par un fil formé d'une multiplicité de filaments, est mis en contact avec la matière sous pression qui peut ainsi l'imprégner à coeur. L'injection de la matière organique dans la chambre centrale est faite perpendiculairement à la trajectoire du fil, ce qui provoque son fractionnement et la séparation d'un certain nombre de filaments par rapport à leurs voisins. La pression exercée préférentiellement d'un seul côté du fil a pour effet également de provoquer une répartition irrégulière des filaments au sein de la matière organique. Cet effet est, du reste, recherché.

Par son principe même, ce dispositif ne permet donc pas d'obtenir un matériau composite au sein duquel le matériau filiforme a conservé sa cohésion.

Par ailleurs l'introduction du matériau filiforme dans les dispositifs connus se fait par un orifice situé sur leur axe longitudinal. Ce mode d'introduction n'est pas sans présenter quelques difficultés lorsque le matériau est constitué de filaments, très fins et lorsque, à la suite d'une rupture dudit matériau il est important de reprendre très rapidement l'opération de gainage.

La demande de brevet JP-A-56-67239 décrit un dispositif destiné à être monté en tête d'équerre à l'extrémité d'une extrudeuse, et dont la partie antérieure est susceptible de pivoter autour d'une charnière. Cette configuration particulière présente l'avantage de faciliter le changement de pièce à l'intérieur dudit dispositif.

La présente invention a pour objet un dispositif qui permet de gainer et, éventuellement, d'imprégner un matériau filiforme d'une couche de matière organique thermoplastique, à une vitesse supérieure à celle atteinte par les dispositifs connus et dans lequel ledit matériau peut être introduit rapidement.

La présente invention a également pour objet un dispositif qui permet d'obtenir un matériau composite, constitué d'un ensemble de fils et/ou filaments gainé et, éventuellement, imprégné de matière organique, au sein duquel les fils et/ou filaments conservent une répartition régulière.

La présente invention a pour objet un dispositif qui permet, en particulier, d'obtenir un fil composite dont l'âme, formée d'un faisceau de filaments, est enrobée d'une matière organique thermoplastique.

Les buts de l'invention sont atteint grâce à un dispositif monté en tête d'équerre à l'extrémité d'une extrudeuse qui comprend, suivant sont axe, un orifice d'entrée auquel succède un poinçon creux dont le conduit débouche dans un canal central, ledit canal étant relié à l'extrudeuse par l'intermédiaire d'une chambre d'alimentation, puis, à la sortie du canal une filière, caractérisé en ce qu'une partie au moins de ce dispositif est mobile ou amovible, le déplacement de ladite partie permettant l'ouverture et la fermeture dudit dispositif sur toute sa hauteur depuis sa périphérie jusqu'à son axe et en ce que, en position de fermeture, le ou les orifices de sortie de la chambre d'alimentation débouchent dans le canal central concentriquement à son axe en convergeant vers ledit axe.

Le dispositif selon l'invention peut comporter une fente longitudinale sur toute la hauteur dudit dispositif, qui s'étend de sa périphérie à son axe. Dans ce cas, la partie mobile est une pièce obturatrice qui vient remplir la fente et dont le profil permet de reconstituer les parois des différents conduits à l'intérieur du dispositif.

Le dispositif selon l'invention peut être constitué de deux parties symétriques par rapport à un plan passant par son axe. La partie fixe est reliée à l'extrudeuse ; la partie mobile pivote autour d'une charnière longitudinale solidaire des deux parties. En position de fermeture, les deux parties viennent s'appliquer l'une contre l'autre et reconstituent les parois des différents conduits à l'intérieur du dispositif.

Ainsi après une rupture, le matériau filiforme peut être à nouveau entraîner mécaniquement avant d'être introduit latéralement dans l'axe du dispositif. La fermeture de ce dernier et la reprise de l'injection peuvent être effectuées rapidement.

La structure interne du dispositif de gainage est également importante dans la mesure où elle doit permettre un revêtement régulier du matériau filiforme, même si ce dernier défile à des vitesses élevées, sachant que la matière organique ne peut pas être injectée à des pressions élevées.

Ainsi, le matériau filiforme, par exemple un fil formé d'une multiplicité de filaments de verre, préalablement guidé par le conduit du poinçon pénètre dans le canal central selon son axe, zone où il se trouve en contact avec la matière organique thermoplastique à l'état fondu sous pression. La section droite du canal est constante sur au moins une partie de sa longueur et plus grande que celle dudit conduit. La matière organique arrive par un ou des orifices dirigés vers l'axe du canal et répartis concentriquement audit axe, et exerce à la surface du fil une pression radiale régulière dirigée vers le centre dudit fil. Le fil, ainsi soumis à un champ de pressions équilibrées pendant son trajet dans le canal, n'a pas tendance à se fragmenter.

De plus, avec un canal central dont la section droite est constante sur au moins une partie de sa longueur, le fil est soumis à une pression radiale constante sur au moins une partie de son trajet dans le canal. Ceci favorise la qualité de l'imprégnation de fil.

Afin que cette pression radiale s'exerce le plus régulièrement possible sur le fil, dès son contact avec la matière à l'état fondu, le ou les orifices de la chambre d'alimentation débouchent, de préférence, à l'entrée du canal central.

La matière fondue arrive, de préférence, dans le canal par un orifice unique qui s'ouvre sur toute sa périphérie, par exemple sous forme d'orifice annulaire lorsque le canal est cylindrique.

Si cette alimentation concentrique permet de conserver la cohésion des filaments qui constituent le fil, le réglage de la pression et/ou de la viscosité de la matière entrant à son contact, celui de sa vitesse de passage dans le dispositif, permettent également de l'imprégner, au moins partiellement, de matière organique.

Le dispositif selon l'invention permet ainsi d'obtenir un fil, dont la partie centrale est formée d'un faisceau de filaments non imprégnés de matière organique, entourée à sa périphérie d'une zone imprégnée, l'ensemble étant revêtu d'une couche d'épaisseur déterminée.

Selon un mode privilégié de réalisation de l'invention, la chambre d'alimentation entoure le poinçon creux et présente, à sa partie inférieure, un conduit de forme tronconique qui converge vers l'axe du canal central.

Ce conduit aboutissant dans le canal par un orifice annulaire, permet d'injecter la matière à l'état fondu dans ledit canal selon une direction voisine de celle suivie par le fil en cours de déplacement. Ainsi l'écart susceptible d'exister entre la vitesse du fil et la vitesse moyenne du courant de matière à l'état fondu peut il être considérablement réduit. Grâce à cette structure interne la vitesse de la matière est au moins égale à 0,5 fois la vitesse du fil. Ceci permet de réduire la pression sous laquelle la matière est injectée dans le canal. Cette pression est inférieure à 50 bars et, de préférence, inférieure à 30 bars. Ceci permet également de réduire de façon importante le cisaillement auquel la matière organique est soumise dès qu'elle entre en contact avec un fil qui se déplace à grande vitesse.

Grâce à cette caractéristique, le dispositif permet de gainer et, éventuellement, d'imprégner un fil qui le traverse à une vitesse supérieure à 5 mètres par seconde, sans que la qualité du revêtement en souffre.

Cet avantage permet, à partir de fils extraits d'enroulement, d'augmenter de façon notable la longueur de fil gainé par unité de temps. Cet avantage permet surtout d'intégrer le dispositif selon l'invention dans l'installation de fabrication du fil que l'on désire gainer.

Le dispositif selon l'invention peut, par exemple, être implanté dans une installation de production de fil de verre. Une telle installation comprend pour l'essentiel une filière, généralement en alliage métallique chauffée par effet Joule, qui sert à refondre le verre ou à le maintenir à l'état fondu. Le verre s'écoule de la filière à partir d'une multiplicité d'orifices, sous la forme de filets qui, étirés mécaniquement, donne naissance à un ensemble de filaments continus. Ces filaments sont rassemblés en un fil directement entraîné à travers le dispositif selon l'invention avant, par exemple, d'être bobiné sur un support en rotation. La rupture accidentelle de plusieurs filaments entraîne l'arrêt de la production. Il est nécessaire alors de reformer l'ensemble des filaments puis de les réunir en un fil qui est étiré mécaniquement. Immédiatement après cette opération le fil en cours d'étirage est introduit instantanément dans le dispositif selon l'invention. L'opération de gainage peut reprendre alors avec le minimum de perte de temps.

Il peut être également implanté dans une installation de production d'un fil mixte verre-matière organique, telle par exemple que décrite dans la demande de brevet EP-A-367 661.

Outre le gain de productivité mentionné précédemment, la mise en oeuvre du dispositif selon l'invention dans le cadre d'un procédé direct supprime la fabrication, l'emballage et le stockage d'enroulements de fils, étapes onéreuses qui précèdent généralement l'opération de gainage.

L'invention sera mieux appréciée à travers la description détaillée suivante de quelques exemples de réalisation, illustrée de figures d'après lesquelles :
* la figure 1 représente, schématiquement, une vue latérale partielle de l'installation dans laquelle le dispositif selon l'invention est mis en oeuvre,
* la figure 2 représente, schématiquement, une vue en coupe longitudinale d'un dispositif selon l'invention en état de marche,
* la figure 3A représente, schématiquement, une vue correspondant à la projection sur un plan transversal d'un premier mode de réalisation de l'invention,
* la figure 3B représente, schématiquement, une vue en coupe longitudinale d'une pièce du dispositif représenté à la figure 3A,
* la figure 4 représente, schématiquement, une vue correspondant à la projection sur un plan transversal d'un deuxième mode de réalisation de l'invention.

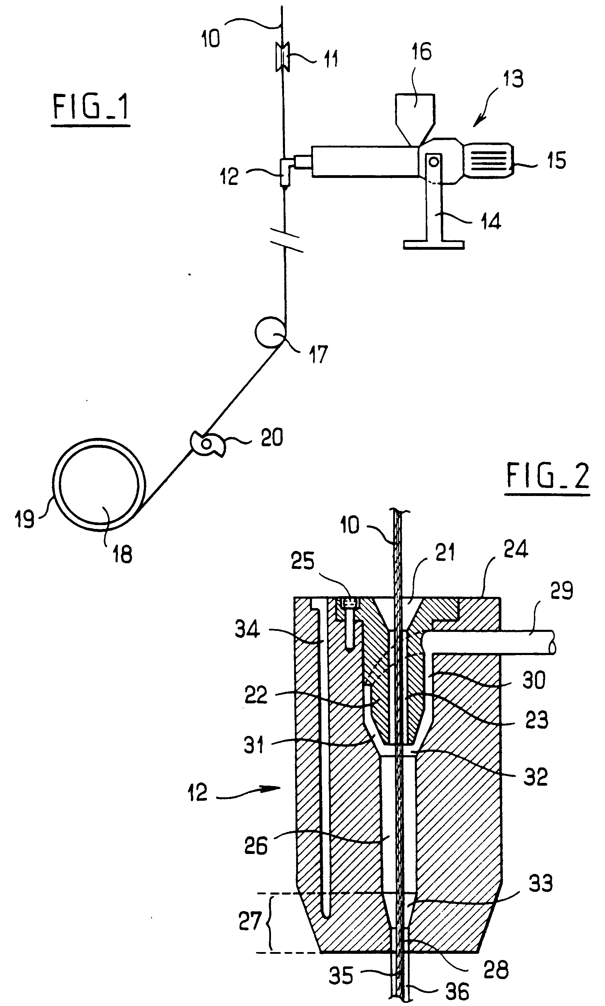

Selon la figure 1, un fil mixte 10, formé d'un ensemble de filaments de verre et de polypropylène, est guidé par un organe 11, qui a pour fonction de maintenir le fil 10 dans l'axe du dispositif 12, monté en tête d'équerre et verticalement à l'extrémité de l'extrudeuse 13. Cette extrudeuse, solidaire du support 14, est équipée de deux vis d'Archimède animées en rotation par le moteur 15.

L'extrudeuse 13 est alimentée en matière organique thermoplastique sous forme de granulés stockés dans la trémie 16. Cette extrudeuse permet d'injecter la matière organique à l'état fondu dans le dispositif 12, sous une forte pression qui demeure inférieure à 50 bars.

Le fil 10, revêtu d'une couche de matière organique figée au moins en surface, passe sur un organe de guidage 17 avant d'être bobiné sur une broche 18, mue en rotation par un moteur non représenté. Le fil 10 est bobiné sous forme d'un enroulement 19 grâce à un organe de répartition 20.

Au lieu d'être entraîné par une broche en rotation, le fil 10 peut l'être par une roue d'étirage et réparti sur un convoyeur, conformément aux procédés et aux dispositifs décrits, par exemple, dans les brevets US-A-3 467 739 et US-A-3 676 095.

Le fil 10 peut être également entraîné par une machine de coupe comme le prévoit, par exemple, le brevet US-A-4 406 196. Dans ce dernier cas, le fil est, de préférence, un fil auquel on a appliqué une torsion préalablement à son gainage, structure qui lui évite d'être écrasé entre les roues de la machine de coupe comme un fil ordinaire.

La figure 2 montre, en coupe longitudinale, la structure interne d'un mode de réalisation du dispositif 12.

Ce dispositif comprend, à sa partie supérieure, un orifice 21 ménagé au sommet d'un poinçon creux 22, dont le conduit 23 a pour fonction essentielle de guider le fil 10 et de le centrer parfaitement dans l'axe du dispositif. Ce poinçon est lui-même fixé sur le corps 24 du dispositif 12 à l'aide d'écrous 25.

Le conduit 23 débouche au sommet d'un canal central 26, de forme cylindrique, dont la section droite est plus grande que celle dudit conduit. Le canal 26 aboutit à une zone 27 de section plus réduite dont l'orifice de sortie 28 sert de filière.

Le dispositif 12 est relié à l'extrudeuse par l'intermédiaire du conduit d'alimentation 29. Ce conduit débouche, à l'intérieur du dispositif 12, dans une chambre 30 qui entoure le poinçon 22. Cette chambre présente, à sa partie inférieure, un conduit 31, de forme tronconique, qui aboutit sous la forme d'une ouverture annulaire 32 au sommet du canal 26.

Cette structure permet, simultanément, de soumettre le fil 10 à une pression radiale régulière dès son contact avec la matière à l'état fondu et de forcer son écoulement de manière à accompagner le fil dans son déplacement.

La zone 27, formée d'un passage tronconique 33 et de l'orifice 28, permet de maintenir la matière organique sous pression dans le canal 26.

Des résistances chauffantes 34, dont le branchement n'est pas représenté, peuvent être logées dans le corps 24 afin de maintenir la matière organique à la température désirée.

A la sortie du dispositif 12, le fil obtenu comprend une âme 35, formée par le faisceau de filaments constituant le fil 10, enrobée d'une couche calibrée 36 de matière organique.

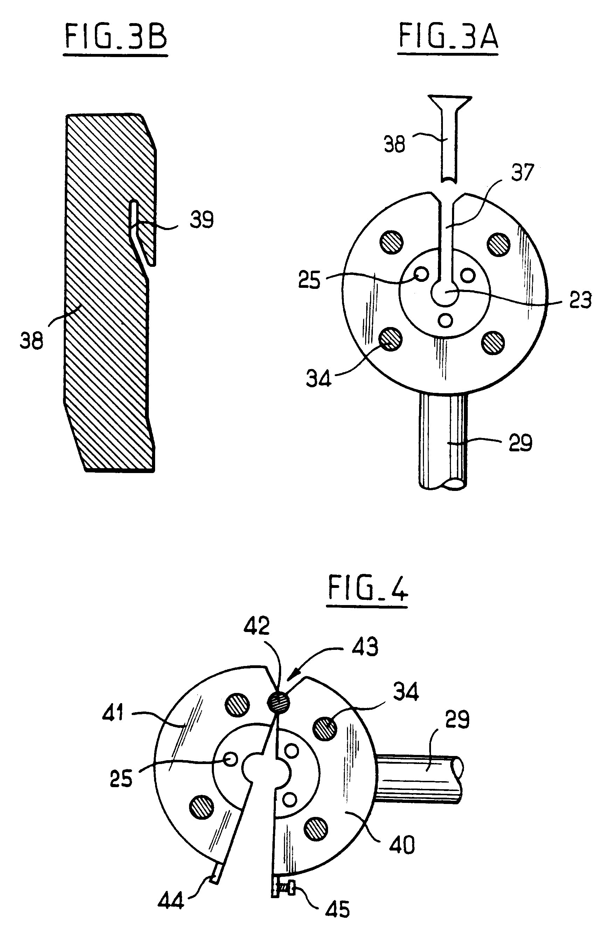

La figure 3A représente, en coupe transversale, un mode de réalisation du dispositif selon l'invention, dont la structure interne est représentée figure 2. Ce dispositif comprend une fente longitudinale 37 sur toute la hauteur du dispositif, à l'opposé du conduit d'alimentation 29 qui le relie à l'extrudeuse. Cette fente, qui pénètre jusqu'au conduit 23 du poinçon et au canal central 26 et se prolonge dans la zone 27, permet d'introduire rapidement le fil 10 lors d'une opération de relance. Ceci est particulièrement avantageux lorsque le dispositif selon l'invention est implanté dans une installation de fabrication du fil, par exemple lorsqu'il s'agit d'un fil de verre.

Dès que la relance est effectuée, une pièce obturatrice 38 vient remplir la fente afin de reconstituer les parois du conduit 23, du canal 26 et de la zone 27. Cette pièce 38 est maintenue en place par un dispositif de fermeture non représenté.

La figure 3B montre, en coupe longitudinale, la pièce 38. Celle-ci comprend une échancrure 39 permettant de reconstituer la chambre 30 et le conduit 31.

La figure 4 représente une variante du dispositif 12. Cette variante comprend une partie fixe 40, reliée à l'extrudeuse par l'intermédiaire du conduit d'alimentation 29, et une partie mobile 41 autour d'une charnière longitudinale 42 solidaire des deux parties. En position de fermeture, ces deux parties symétriques viennent s'adapter l'une à l'autre selon un plan longitudinal passant par l'axe du dispositif 12. Leurs faces internes sont usinées de manière à reconstituer, lors de la fermeture, le conduit du poinçon 22, la chambre d'alimentation 30, le canal 26 et l'orifice 28, tels que représentés à la figure 2. La charnière 42 peut être fixée sur une génératrice du dispositif, ou au fond d'une échancrure 43 ménagée sur toute sa hauteur. Un dispositif, tel qu'une patte 44 associée à une vis 45, permet de bloquer les deux parties en position de fermeture.

### EXEMPLE

Un dispositif selon l'invention est disposé en tête d'équerre à l'extrémité d'une extrudeuse monovis (diamètre de vis = 25 mm ; L/D = 30). Ce dispositif, du type de celui représenté figure 2, présente les caractéristiques suivantes:

| | |
|---|---|
| * diamètre de passage du poinçon (23) = | 0,95 mm, |
| * diamètre du canal central (24) = | 2 mm, |
| * longueur du canal central (24) = | 40 mm. |

Ce dispositif est alimenté en matière à l'état fondu formée du mélange suivant :
* 30 % d'une résine hydrocarbonée hydrogénée :
   - point de ramollissement bille/anneau = 97-103°C,
   - viscosité Brookfield = 150 mPa.s à 180°C
* 50 % d'une cire de polypropylène :
   - point de ramollissement bille/anneau = 163°C,
   - viscosité Brookfield = 600 mPa.s à 190°C
* 20 % d'un polypropylène modifié chimiquement par greffage d'anhydride maléique :
   - point de ramollissement bille/anneau = 157°C,
   - viscosité Brookfield = 275 mPa.s à 190°C
La température du dispositif est de l'ordre de 230°C. La pression de la matière à l'intérieur du dispositif est de l'ordre de 10 à 15 bars.

Un fil mixte, formé de filaments organiques et de filaments de verre, traverse le dispositif à une vitesse de 10 mètres par seconde.

Ce fil est constitué de 800 filaments de verre E, d'un diamètre moyen de 14 micromètres et de 750 filaments obtenus par filage d'un mélange d'un polypropylène homopolymère, dont l'indice de fluidité est de 20 dg/min (mesuré selon la norme ISO 1133) et d'un polypropylène modifié chimiquement par greffage d'anhydride maléique. Les filaments de verre sont ensimés par un ensimage en phase non-aqueuse. Cet ensimage comprend, pour l'essentiel, un résine époxy-cycloaléphatique, un vinyl éther et un silane aminé.

Dans ces conditions, on obtient un fil comprenant une âme formée par le faisceau des filaments dont la zone externe est imprégnée de matière organique, l'ensemble étant recouvert d'une couche de ladite matière.

La quantité de matière organique qui imprègne et recouvre le fil mixte est, exprimée en pourcentage pondéral par rapport au titre du fil, de 20 %.

Le dispositif selon l'invention peut servir à gainer aussi bien des fils formés exclusivement de filaments destinés à servir de renforts, tels les filaments de verre, de carbone, les filaments aramides ou métalliques, que des fils mixtes.

Les fils gainés par le dispositif selon l'invention peuvent comporter une torsion ou non.

## Revendications

1. Dispositif de gainage d'un matériau, constitué d'un ensemble de fils et/ou de filaments, par une matière organique à l'état fondu, monté en tête d'équerre à l'extrémité d'une extrudeuse qui comprend, suivant son axe, un orifice d'entrée auquel succède un poinçon creux dont le conduit débouche à l'entrée d'un canal central, ledit canal étant relié à l'extrudeuse par l'intermédiaire d'une chambre d'alimentation, puis, à la sortie du canal une filière, **caractérisé en ce qu**'une partie au moins de ce dispositif est mobile ou amovible, le déplacement de ladite partie permettant l'ouverture et la fermeture dudit dispositif sur toute sa hauteur depuis sa périphérie jusqu'à son axe et **en ce que**, en position de fermeture, le ou les orifices de sortie de la chambre d'alimentation débouchent dans le canal central concentriquement à son axe en convergeant vers ledit axe.

2. Dispositif selon la revendication 1, **caractérisé en ce qu**'il comprend une pièce amovible qui s'adapte dans une fente longitudinale ménagée sur toute sa hauteur, ladite pièce obturant complètement ladite fente.

3. Dispositif selon la revendication 1, **caractérisé en ce qu**'il est formé de deux parties, l'une fixe reliée à l'extrudeuse, l'autre mobile autour d'une charnière longitudinale solidaire des deux parties, qui viennent s'adapter l'une à l'autre en position de fermeture sur toute la hauteur dudit dispositif et selon un plan longitudinal passant par son axe.

4. Dispositif selon la revendication 1, **caractérisé en ce que** le ou les orifices de la chambre d'alimentation débouchent à l'entrée du canal central.

5. Dispositif selon l'une des revendications 1 et 4, **caractérisé en ce qu**'il comprend un canal central cylindrique et que l'orifice de la chambre d'alimentation qui y débouche est de forme annulaire.

6. Dispositif selon la revendication 5, **caractérisé en ce que** la chambre d'alimentation entoure le poinçon creux et présente, à la partie inférieure, un conduit de forme troncomique qui converge vers l'axe du canal central.

## Claims

1. Device for coating a material, formed of an assembly of threads and/or filaments, with an organic material in the molten state, mounted at the crosshead at the end of an extruder which comprises, along an axis, an inlet aperture which is followed by a hollow mandrel the duct of which opens out at the entry of a central duct, said duct being connected to the extruder by means of a supply chamber, and then, at the outlet of the duct, a die nut, characterised in that at least one part of this device is movable or detachable, the displacement of said part permitting said device to be opened or closed over the entire length thereof from its periphery to its axis, and in that, in the closed position, the outlet aperture or apertures from the supply chamber open out into the central duct, concentric to the axis thereof and converging towards said axis.

2. Device according to Claim 1, characterised in that it comprises a detachable part which fits in a longitudinal slot provided over the entire height thereof, said part completely covering said slot.

3. Device according to Claim 1, characterised in that it is formed of two parts, one fixed, connected to the extruder, the other movable about a longitudinal hinge which is integral with the two parts, which fit together in the closed position over the entire height of said device and along a longitudinal plane passing through its axis.

4. Device according to Claim 1, characterised in that the aperture or apertures of the supply chamber open out at the inlet of the central duct.

5. Device according to one of Claims 1 to 4, characterised in that it comprises a cylindrical central duct and that the aperture of the supply chamber which opens into it is of an annular shape.

6. Device according to Claim 5, characterised in that the supply chamber surrounds the hollow mandrel and has, at the lower part, a duct of frustoconical form which converges towards the axis of the central duct.

## Patentansprüche

1. Vorrichtung zum Ummanteln eines aus einer Einheit von Fäden und/oder Filamenten bestehenden Materials mit einem geschmolzenen organischen Stoff, welche in Form eines Winkelkopfs am Ende eines Extruders angebracht ist und in ihrer Achse eine Eintrittsöffnung, an die sich eine Hohlnadel anschließt, deren Leitung in den Eingang eines zentralen Kanals mündet, der über eine Versorgungskammer mit dem Extruder verbunden ist, und anschließend am Ausgang des Kanals eine Spinndüse enthält, **dadurch gekennzeichnet, daß** wenigstens ein Teil der Vorrichtung beweglich oder lösbar ist, durch die Bewegung dieses Teils das Öffnen und Schließen dieser Vorrichtung über ihre gesamte Höhe ab ihrem Umfang bis zu ihrer Achse möglich wird **und daß** in Schließposition die Austrittsöffnung/en der Versorgungskammer in den zentralen Kanal mündet/münden, der konzentrisch und zulaufend zu ihrer Achse verläuft.

2. Vorrichtung nach Anspruch 1, **dadurch gekennzeichnet, daß** sie ein lösbares Teil enthält, das sich in einen über ihre gesamte Höhe angebrachten Längsschlitz einpaßt und ihn vollständig verschließt.

3. Vorrichtung nach Anspruch 1, **dadurch gekennzeichnet, daß** sie aus zwei Teilen gebildet ist, von denen einer fest mit dem Extruder verbunden und der andere um ein Längsscharnier beweglich ist, das fest mit diesen beiden Teilen verbunden ist, die sich in Schließposition über die gesamte Höhe der Vorrichtung in einer Längsebene ineinander einpassen, die von deren Achse durchlaufen wird.

4. Vorrichtung nach Anspruch 1, **dadurch gekennzeichnet, daß** die Öffnung/en der Versorgungskammer in den Eingang des zentralen Kanals mündet/münden.

5. Vorrichtung nach einem der Ansprüche 1 bis 4, **dadurch gekennzeichnet, daß** sie einen zylindrischen zentralen Kanal enthält **und daß** die Öffnung der Versorgungskammer, die in ihn mündet, ringförmig ist.

6. Vorrichtung nach Anspruch 5, **dadurch gekennzeichnet, daß** die Versorgungskammer die Hohlnadel umgibt und im unteren Teil eine kegelstumpfförmige Leitung aufweist, die auf die Achse des zentralen Kanals zuläuft.
